# EUROPÄISCHE PATENTANMELDUNG

(11) **EP 2 945 004 A1**
(43) Veröffentlichungstag der Anmeldung: **18.11.2015**
(21) Anmeldenummer: 15001439.7
(22) Anmeldetag: 13.05.2015
(51) Int. Cl.: G02B 27/09

(54) **VORRICHTUNG ZUR ERZEUGUNG EINER LICHTINTENSITÄTSVERTEILUNG**

(30) Priorität: 15.05.2014 DE 102014007067
(71) Anmelder: JENOPTIK Optical Systems GmbH, 07745 Jena (DE)
(72) Erfinder: Juhasz, Thomas, 99428 Weimar (DE); Graf, Tobias, 07743 Jena (DE); Müller, Ralf, 98617 Henneberg (DE)
(74) Vertreter: Waldauf, Alexander

(57) **Zusammenfassung**

Die Erfindung betrifft eine Vorrichtung (100) zur Erzeugung einer wunschgemäßen Lichtintensitätsverteilung, umfassend eine Lichtquelle (1), die einen Lichtstrahl (5) mit einer ersten Intensitätsverteilung in eine Strahlrichtung (S) abgibt, eine der Lichtquelle nachgeordneten Strahlformungsoptik, die den Lichtstrahl in die wunschgemäße zweite Intensitätsverteilung in einer Bearbeitungsebene (4) umwandelt, dadurch gekennzeichnet, dass die Strahlformungsoptik ein diffraktives Phasenelement (2) mit integrierter sphärischer Phase und eine Fokussierlinse (3) umfasst.

## Beschreibung

Die vorliegende Erfindung bezieht sich auf eine Vorrichtung zur Erzeugung einer Lichtintensitätsverteilung gemäß den Merkmalen von Patentanspruch 1. Die Erfindung findet insbesondere Anwendung bei Vorrichtungen, die eine erste Intensitätsverteilung in eine zweite Intensitätsverteilung umwandeln. Derartige Vorrichtungen werden zur Strahlformung für kohärente oder partiell kohärente Laserquellen sowie für Strahlungsquellen eingesetzt, die Licht in einem schmalen Spektralbereich emittieren.

Der industrielle und wissenschaftliche Einsatz von Laserstrahlungsquellen hat in den letzten Jahren in seiner Vielfalt und Häufigkeit zugenommen. Wichtige Anwendungsgebiete finden sich beispielsweise in der Materialbearbeitung, der Medizintechnik, der Halbleiterindustrie sowie der Messtechnik, wobei der Laserstrahl beispielsweise als Werkzeug zum Abtragen von Material, für die definierte Beleuchtung oder auch zur Erfassung physikalischer Kenngrößen eingesetzt wird. Der Grund für die breite Anwendung von Lasern liegt unter anderem in der physikalischen Eigenschaft der Laserstrahlung selbst, die sich durch gute Kollimierbarkeit und Fokussierbarkeit, Schmalbandigkeit sowie Kohärenz auszeichnet.

Trotz der genannten Vorteile ist es in den meisten Anwendungen notwendig, die vom Laser emittierte Strahlung durch geeignete Optiken zu modifizieren beziehungsweise zu formen. Das trifft vor allen Dingen dann zu, wenn die in der Anwendung benötigte Intensitätsverteilung in ihrer räumlichen Ausdehnung oder Divergenz, in ihrem Intensitätsprofil oder in der Homogenität von dem Strahl des eingesetzten Lasers abweicht.

So ist es in bestimmten Anwendungsfällen notwendig, eine Strahlung mit einer ersten Intensitätsverteilung mit asymmetrischen und inhomogenen Intensitätsprofil, wie sie beispielsweise von Excimerlasern emittiert wird, in eine homogene zweite Intensitätsverteilung mit einem vorgegebenen Intensitätsprofil umzuwandeln. Solche homogenen Intensitätsverteilungen werden beispielsweise für die Materialbearbeitung oder auch für die Beleuchtung in lithographischen Systemen benötigt.

Als strahlformende Elemente sind aus dem Stand der Technik unter anderem diffraktive optische Elemente bekannt, die durch eine computergenerierte beugende Struktur ein Strahlungsfeld durch komplexe Veränderungen der Amplitude und der Phase gezielt modifizieren. Ein Nachteil dieser diffraktiven optischen Elemente ist eine Empfindlichkeit gegenüber herstellungsbedingter Abweichungen des Oberflächenprofils vom berechneten Sollprofil. Insbesondere resultiert aus den Abweichungen der Profiltiefe eine unter Umständen störende Intensitätserhöhung durch die nullte Beugungsordnung, die demjenigen Strahlungsanteil entspricht, der ungebeugt durch das diffraktive optische Element hindurchtritt und z. B. bei der Fokussierung mit einer Fourierlinse einen hellen, nahezu punktförmigen Bereich im Zentrum einer flächig verteilten Strahlungsintensität bildet.

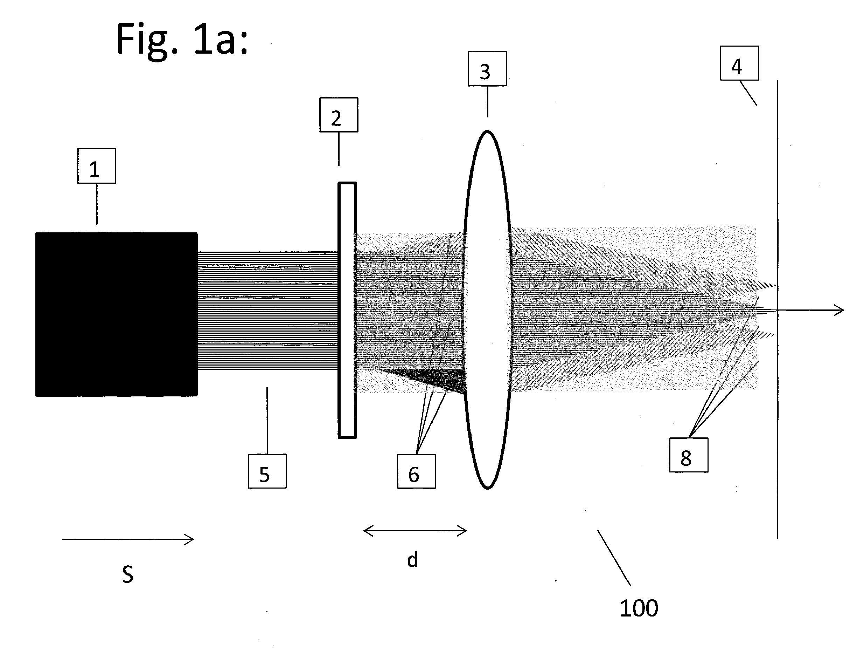

Die klassische Strahlformung mit optischen Elementen (z. B. diffraktiven oder refraktiven optischen Elementen) erfolgt häufig in einer Bearbeitungsebene eines so genannten "Fraunhofer-Aufbaus" wie in Fig. 1a schematisch dargestellt. Ein kollimierter Strahl 5 beleuchtet ein strahlformendes diffraktives optisches Element 2, das in einem Abstand d vor oder ggf. hinter einer fokussierenden Linse beziehungsweise einer Fokussiereinheit 3 mit einer Brennweite f platziert ist.

Die durch die strahlformende Optik abgelenkte Lichtverteilung 6 wird mittels der fokussierenden Linse 3 (mit der Brennweite f) in der hinteren Brennebene oder auch Bearbeitungsebene 4 in die gewünschte räumliche und zu nutzende Lichtverteilung (Nutzlichtverteilung) 8 transformiert.

Das Beugungsmuster bzw. die gewünschte Lichtverteilung (Nutzlichtverteilung) in der hinteren Brennebene beziehungsweise Bearbeitungsebene der Linse wird auch als Fernfeldverteilung bezeichnet. Vernachlässigt man die Dicke der fokussierenden Linse, entspricht der Abstand von der strahlformenden Optik zur hinteren Brennebene, im Fall d=0 genau der Brennweite f; im Fall d = f genau der zweifachen Brennweite. Daher werden diese Ausführungsformen gemeinhin auch als "1f- und 2f-Aufbau" bezeichnet. Ein allgemeiner "Fraunhofer-Aufbau" ist in Fig. 1a in einer schematischen Ansicht dargestellt. Ein derartiger Aufbau umfasst zumindest eine Lichtquelle 1, die einen Lichtstrahl mit einer ersten Intensitätsverteilung 5 in eine Strahlrichtung S abgibt. Der Lichtquelle sind in Strahlrichtung gesehen ein diffraktives optisches Element 2 und eine Fokussiereinheit 3, die zusammen eine Strahlformungsoptik bilden, nachgeordnet. Die Strahlformungsoptik wandelt den Lichtstrahl mit einer ersten Intensitätsverteilung in eine zweite Intensitätsverteilung in einer Bearbeitungsebene 4 um.

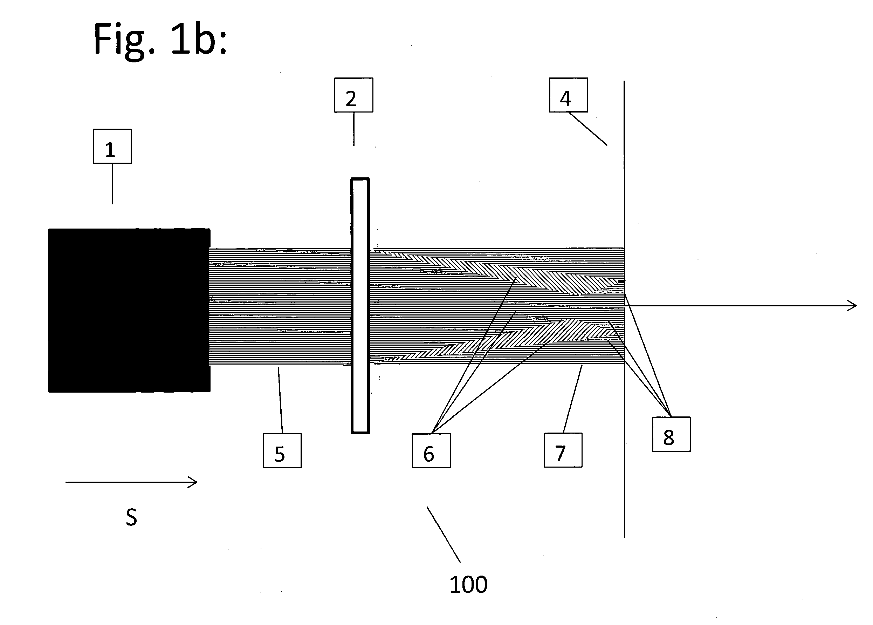

Wie bereits zuvor erläutert, führen diese Aufbauten zu einer Fokussierung der nullten Ordnung in der Bearbeitungsebene, was zu unerwünschten Nebeneffekten in der zweiten Intensitätsverteilung führen kann. Um diese unerwünschten Nebeneffekte zu vermeiden, wird oftmals ein so genannter "Fresnel-Aufbau" verwendet. Ein derartiger Aufbau ist in einer schematischen Ansicht in Fig. 1b dargestellt. Der "Fresnel-Aufbau" gemäß Fig. 1b unterscheidet sich vom Aufbau gemäß Fig. 1a dadurch, dass die Fokussiereinheit 3 dadurch ersetzt wird, dass die strahlformende Phasentransmission des DOEs zusätzlich mit einer sphärischen Phase ("Fresnel-Phasentransmission") multipliziert wird. Das so entstehende sogenannte "Fresnel-Element" vereint die strahlformenden und fokussierenden Eigenschaften in einem Element. Vorteil eines solchen selbstfokussierenden Fresnel-Elementes ist, dass die nullte Beugungsordnung nicht fokussiert wird.

Bei kurzen Brennweiten des Fresnel-Elementes können jedoch die Phasengradienten in der Struktur der Fresnel-Phasentransmission so groß werden, dass bei der Berechnung der pixelierten Struktur des DOE bei einer gegebenen Pixelgröße und einem gegebenen Quantisierungslevel die Phase ungenau approximiert wird. Daraus ergeben sich gegebenenfalls negative Auswirkungen auf die Qualität der Intensitätsverteilung in der Bearbeitungsebene.

Es ist daher Aufgabe der vorliegenden Erfindung, eine Vorrichtung zur Erzeugung eines Lichtstrahles zur Verfügung zu stellen, welche diese Nachteile überwindet. Diese Aufgabe wird durch eine Vorrichtung gemäß den Merkmalen von Patentanspruch 1 gelöst. Vorteilhafte Weiterbildungen werden durch die abhängigen Patentansprüche näher definiert.

In einem Grundgedanken der Erfindung weist eine Vorrichtung zur Erzeugung einer wunschgemäßen Intensitätsverteilung eine Lichtquelle auf, aus der ein Lichtstrahl mit einer ersten Intensitätsverteilung in eine Strahlrichtung S austritt. Der Lichtquelle ist eine Strahlformungsoptik nachgeordnet, die den Lichtstrahl in eine zweite Intensitätsverteilung in einer Bearbeitungsebene umwandelt, wobei die Strahlformungsoptik in Strahlrichtung S gesehen ein selbstfokussierendes diffraktives optisches Element (Fresnel-Element) - also ein diffraktives Phasenelement mit integrierter sphärischer Phase - und eine zusätzliche refraktive Fokussiereinheit (Fourierlinse) umfasst. Die erfindungsgemäße Lösung erlaubt es z. B. bei gleichem Abstand zwischen Fourierlinse und Bearbeitungsebene (dem so genannten Arbeitsabstand) ein Fresnel-Element mit einer größeren Brennweite als in dem reinen "Fresnel-Aufbau" gemäß dem Stand der Technik zu verwenden. Dadurch wird die Gradientensteilheit in der Fresnel-Phasentransmission reduziert. Gleichzeitig kann bei entsprechender Wahl der Brennweiten eine vollständige Fokussierung der nullten Ordnung durch die Fokussiereinheit vermieden werden.

Unter einer Lichtquelle wird insbesondere eine Strahlungsquelle verstanden, die monochromatisches Licht, also Licht in einem schmalen Spektralbereich, aussendet. Beispielsweise kann es sich bei der Lichtquelle um eine Laserquelle oder eine LED handeln.

In einer weiteren bevorzugten Ausführungsform weist das diffraktive Phasenelement eine Brennweite f1 und die Fokussiereinheit eine Brennweite f2 auf, wobei die Gleichung f1=f2 gilt. Alternativ ist es auch möglich, dass das optische Element eine Brennweite f1 aufweist und die Fokussiereinheit eine Brennweite f2 aufweist und die Gleichung f1≠f2 gilt. Des Weiteren kann das optische Element in einem Abstand d vor oder hinter der Fokussieroptik platziert sein. Bevorzugt ist das diffraktive Phasenelement als quantisiertes oder kontinuierliches Phasenelement ausgebildet.

Es versteht sich, dass die eben beschriebenen Ausführungsformen in Alleinstellung oder in Kombination untereinander dargestellt werden können. Umfasst eine bevorzugte Ausführungsform eine "und/ oder"-Verknüpfung zwischen einem ersten Merkmal und einem zweiten Merkmal, so ist dies so zu lesen, dass die Ausführungsform sowohl das erste Merkmal als auch das zweite Merkmal und gemäß einer weiteren Ausführungsform entweder nur das erste Merkmal oder nur das zweite Merkmal aufweist.

Vorteilhafte Ausführungsbeispiele der vorliegenden Erfindung werden nachfolgend Bezug nehmend auf die Figuren näher erläutert. Es zeigen:
- Fig. 1a: schematischer Fraunhofer-Aufbau einer Vorrichtung zur Erzeugung eines Lichtstrahles nach dem Stand der Technik;
- Fig. 1b: schematischer Fresnel-Aufbau einer Vorrichtung zur Erzeugung eines Lichtstrahles nach dem Stand der Technik;
- Fig. 2: schematischer Aufbau einer erfindungsgemäßen Vorrichtung zur Erzeugung einer Lichtintensitätsverteilung;
- Fig.3a: schematischer Fraunhofer-1f-Aufbau nach dem Stand der Technik;
- Fig.3b: schematischer Fresnel-Aufbau nach dem Stand der Technik;
- Fig.3c: schematischer Aufbau eines Anwendungsbeispiels für einen erfindungsgemäßen Aufbau;
- Fig. 4: Vergleich der Uniformitätsfehler der Anwendungsbeispiele;
- Fig. 5: Vergleich der Intensität der 0-ten Ordnung der Anwendungsbeispiele;
- Fig. 6: Vergleich von Phasentransmissionsprofilen diffraktiver optischer Elemente aus einem Fraunhofer-1f-Aufbau, einem Fresnel-Aufbau und einem erfindungsgemäßen Aufbau;

Fig. 1a zeigt in einer schematischen Ansicht einen Aufbau einer Vorrichtung 100 zur diffraktiven Strahlformung nach dem Stand der Technik (Fraunhofer-Aufbau). Der Aufbau besteht aus einer Lichtquelle 1, einem strahlformenden diffraktiven Element (Fraunhofer-Element) 2 oder auch kurz als "DOE" bezeichnet und einer refraktiven Fokussierlinse (Fourierlinse) 3. Die Strahlformung wird in Form der transversalen Intensitätsverteilung in der hinteren Brennebene (Arbeitsebene) 4 der Fokussierlinse beobachtet. Der kollimierte Lichtstrahl 5 mit gegebener transversaler Intensitätsverteilung und einer Strahlrichtung S trifft auf das DOE 2 und wird an den Strukturen gebeugt. Die DOE Struktur gibt den Anteil des Lichts, der in die einzelnen Beugungsordnungen 6 einfließt, vor. Die Fokussierlinse 3 fokussiert das gebeugte Licht in der Arbeitsebene 4 und erzeugt dadurch in der Arbeitsebene 4 die gewünschte Intensitätsverteilung 8.

Fig. 1b zeigt in einer schematischen Ansicht einen Aufbau einer Vorrichtung zur diffraktiven Strahlformung nach dem Stand der Technik (Fresnel-Aufbau). Der Aufbau besteht aus einer Lichtquelle 1 und einem strahlformenden diffraktiven Element (Fresnel-Element) 2. Die Strahlformung wird in Form der transversalen Intensitätsverteilung in der Arbeitsebene 4 beobachtet, wobei der Arbeitsabstand durch die Brennweite der sphärischen Phase des Fresnel-Elements bestimmt ist. Der kollimierte Lichtstrahl 5 mit gegebener transversaler Intensitätsverteilung trifft auf das DOE 2 und wird an den Strukturen gebeugt. Die DOE Struktur gibt den Anteil des Lichts, der in die einzelnen Beugungsordnungen 6 einfließt, vor. Zudem ist eine sphärische Phasentransmission mit fester Brennweite entsprechend dem Arbeitsabstand in die diffraktive Struktur integriert. Die sphärische Phasentransmission erzeugt einen zusätzlichen Beugungseffekt, der dazu führt, dass das gebeugte Licht in der Arbeitsebene 4 fokussiert wird. Der ungebeugte Anteil 7 erfährt in diesem Fall keine Fokussierung, da diese durch die diffraktiven Strukturen hervorgerufen wird und nicht durch eine zusätzliche refraktive Linse.

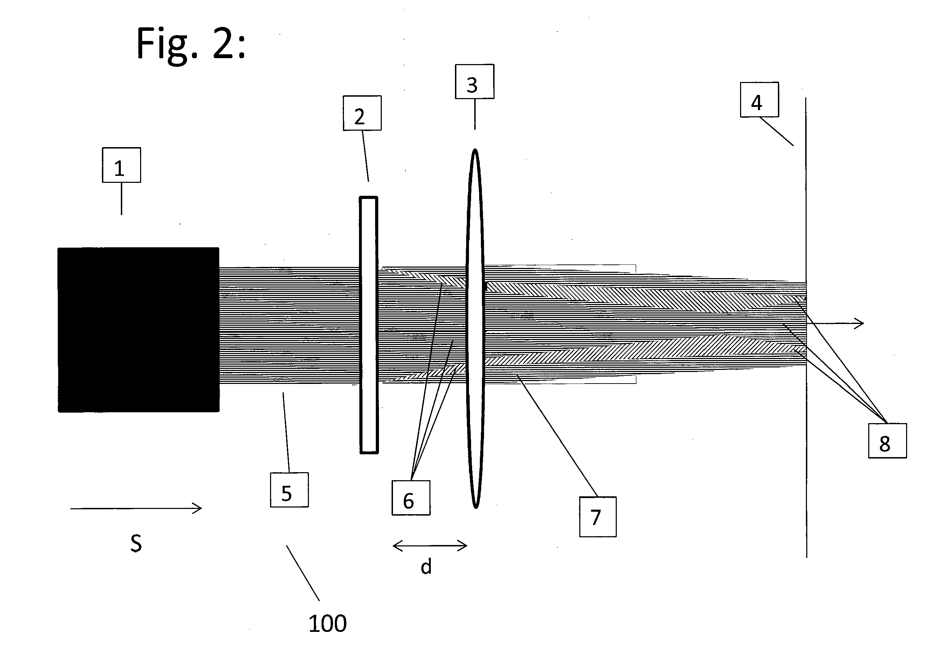

Fig.2 zeigt in einer schematischen Ansicht einen Aufbau einer erfindungsgemäßen Vorrichtung 100 zur Erzeugung eines Lichtstrahls. Der kollimierte Strahl 5 aus der Lichtquelle 1 wird am diffraktiven Phasenelement bzw. DOE 2 gebeugt, wobei sowohl eine Intensitätsverteilung in die gewünschten Beugungsordnungen als auch eine fokussierende sphärische Phase im Element integriert sind. Vorzugsweise wird die diffraktive Struktur für die sphärische Phase in die beugende Struktur für die Formung der Intensitätssverteilungen integriert, wobei sich die resultierende diffraktive Struktur auf einer Seite des DOE 2 befindet. Dazu kann beispielsweise die Wirkung einer geeigneten Linse in eine Phasenfunktion umgesetzt werden, ähnlich einer Fresnellinse. Diese wird je nach Herstellungsverfahren gegebenenfalls in Pixeln diskretisiert und in Höhenstufen quantisiert. Um die Intensitätsformung und Linsenwirkung in einer diffraktiven Struktur zu kombinieren, können beispielsweise die entsprechenden Phasenfunktionen kombiniert werden. Ein bevorzugtes Modell ist dabei die dünne Elemente Approximation, bei der die zwei Phasenfunktionen addiert (modulo 2pi) beziehungsweise die zugehörigen komplexen Amplituden multipliziert werden.

Das gebeugte Licht 6 wird aufgrund der sphärischen Phase bereits fokussiert, diese Fokussierung wird durch die zusätzliche Fokussierlinse 3 noch weiter verstärkt, so dass sich in der Arbeitsebene 4, die durch die Kombination der Brennweiten von diffraktivem und refraktivem Element und dem Abstand der Elemente zueinander bestimmt wird, eine neue Intensitätsverteilung 8 aus den fokussierten Beugungsordnungen ergibt. Der am DOE 2 ungebeugte Lichtanteil 7 erfährt eine Fokussierung an der refraktiven Linse 3. Da die Brennebene der refraktiven Linse jedoch nicht mit der Arbeitsebene des erfindungsgemäßen Aufbaus zusammenfällt, fällt die Intensität der nullten Beugungsordnung wesentlich geringer aus, als in einem reinen Fraunhofer-Aufbau. Das DOE 2 kann im erfindungsgemäßen Aufbau auch hinter der Fokussierlinse 3 platziert sein.

Je kleiner die Brennweite einer Linse, desto größer ist die Krümmung der sphärischen Phase und damit der sphärische Anteil der Phasentransmission. Im Falle eines Fresnel-Elements (wie in Fig. 1 b) ergeben sich bei kleineren Brennweiten größere Steigungen im Phasenprofil. Die Strukturgrößen, die noch aufgelöst werden können, sind durch die verfügbaren Herstellungsverfahren begrenzt. Demzufolge lassen sich diffraktive sphärische Phasentransmissionen mit größerer Brennweite in der Regel besser fertigen als solche mit kleinerer Brennweite. Der erfindungsgemäße Aufbau erlaubt es, bei gleich bleibendem Arbeitsabstand ein leichter herstellbares Fresnel-Element mit größerer Brennweite zu verwenden.

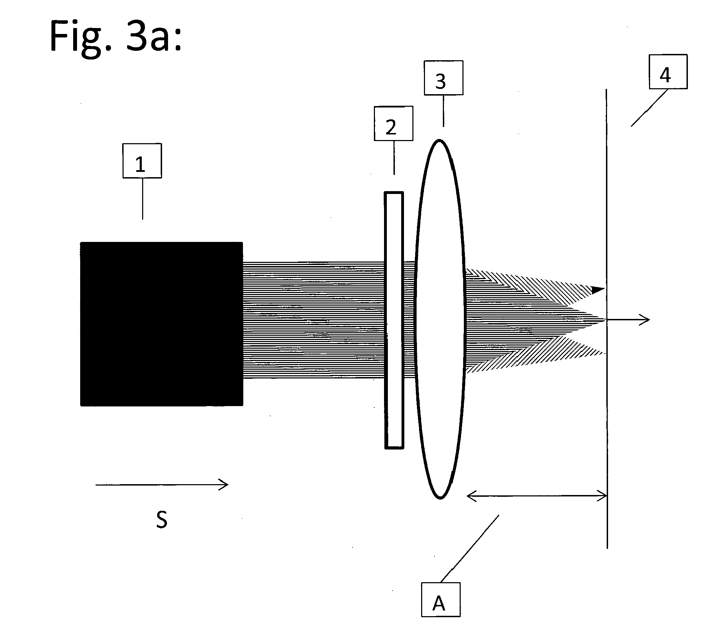

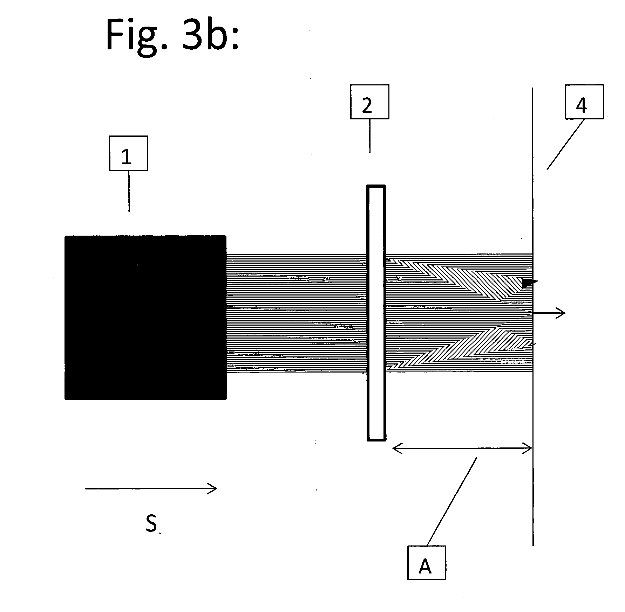

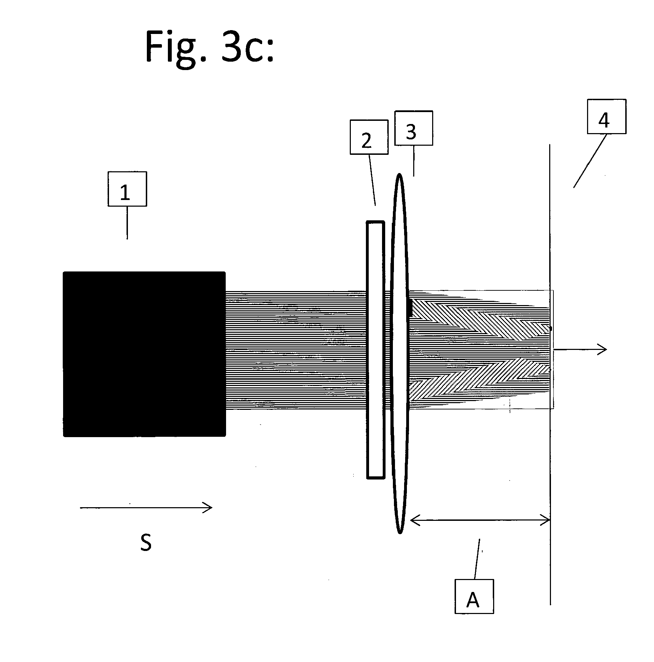

Fig. 3 zeigt zwei Beispielaufbauten nach dem Stand der Technik. Fig 3a zeigt einen 1f-Aufbau, der Arbeitsabstand A ist durch die Brennweite der Fourierlinse 3 bestimmt. Fig. 3b zeigt einen Fresnel-Aufbau, der Arbeitsabstand A ist durch die Brennweite des Fresnel-Elementes bestimmt. Ein Beispiel für einen erfindungsgemäßen Aufbau in dem das DOE direkt vor der Fokussierlinse platziert ist, ist in Fig. 3c gezeigt. Mit der Anordnung in Fig. 3c kann bei gleichem Arbeitsabstand die doppelte Brennweite für das diffraktive und refraktive Element verwendet werden wie in dem Fraunhofer-1f-Aufbau und Fresnel-Aufbau nach dem Stand der Technik.

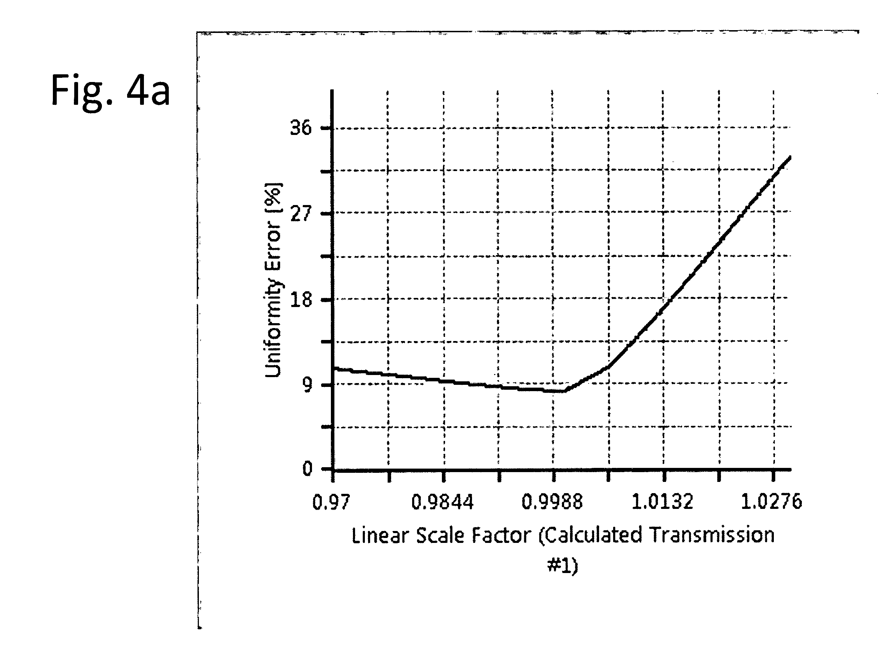

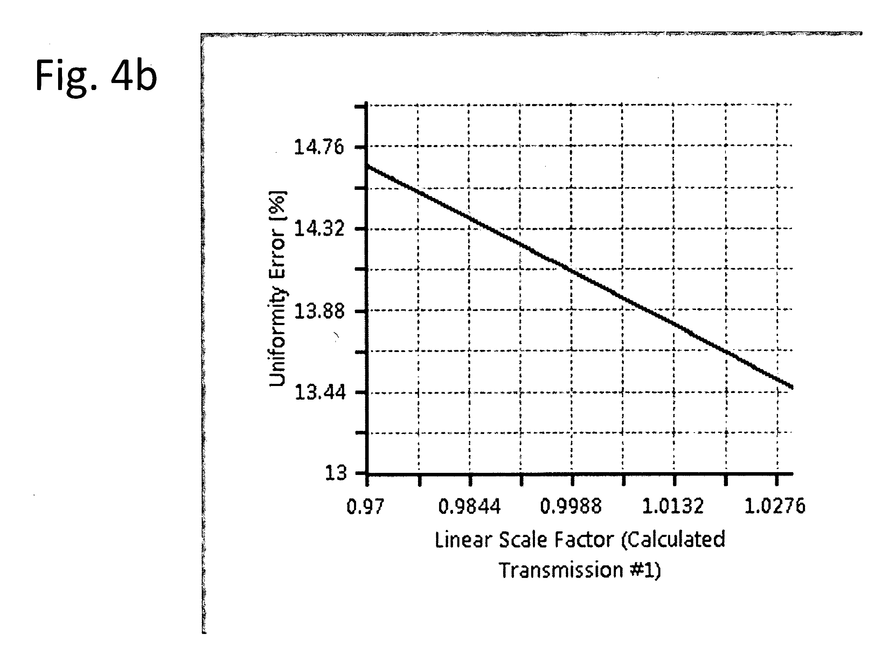

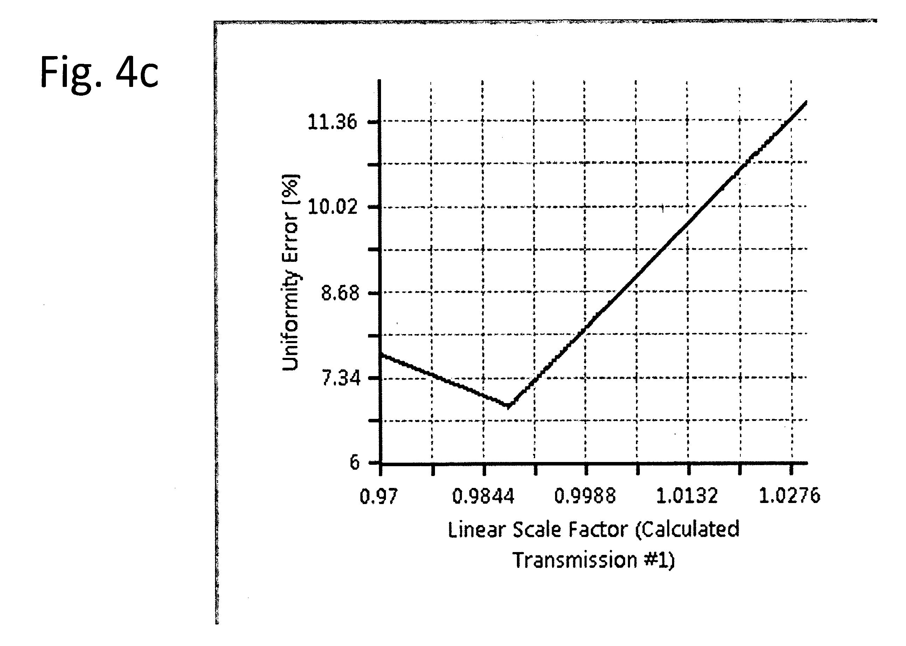

In Fig. 4 ist ein Vergleich der Uniformitätsfehler der verschiedenen Designansätze in einer Übersicht dargestellt. Der Uniformitätsfehler stellt eine wichtige Gütefunktion bei optischen Aufbauten dar. Der Uniformitätsfehler wurde in einer kreisförmigen Signalregion in der Bearbeitungsebene mit 300 µm evaluiert. Fig. 4a zeigt den Uniformitätsfehler im Fraunhofer-1f-Aufbau (vgl. Fig 3a), Fig 4b im Fresnel-Aufbau (vgl. Fig 3b) und Fig 4c einen erfindungsgemäßen Aufbau (vgl. Fig. 3c). Wie in Fig. 4 zu sehen ist, ist der erfindungsgemäße Aufbaute bezüglich des Uniformitätsfehlers deutlich weniger anfällig als das 1f-Element. Auch gegenüber dem reinen Fresnel-Element ist die Uniformität bei dem erfindungsgemäßen Aufbaut ebenfalls besser, wenn die Schwankungen beim Fresnel-Element auch nicht so groß sind wie bei dem 1 f-Aufbau.

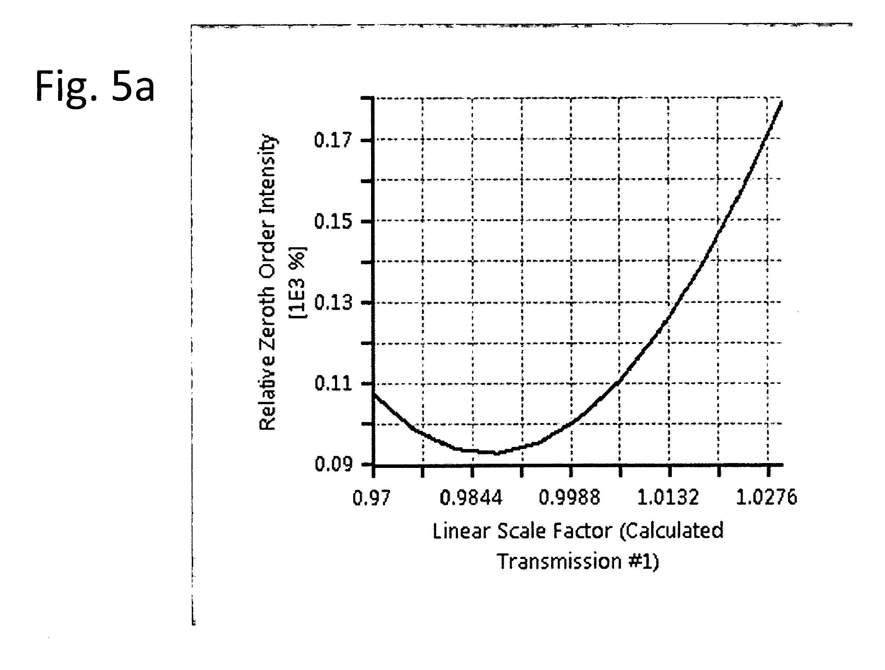

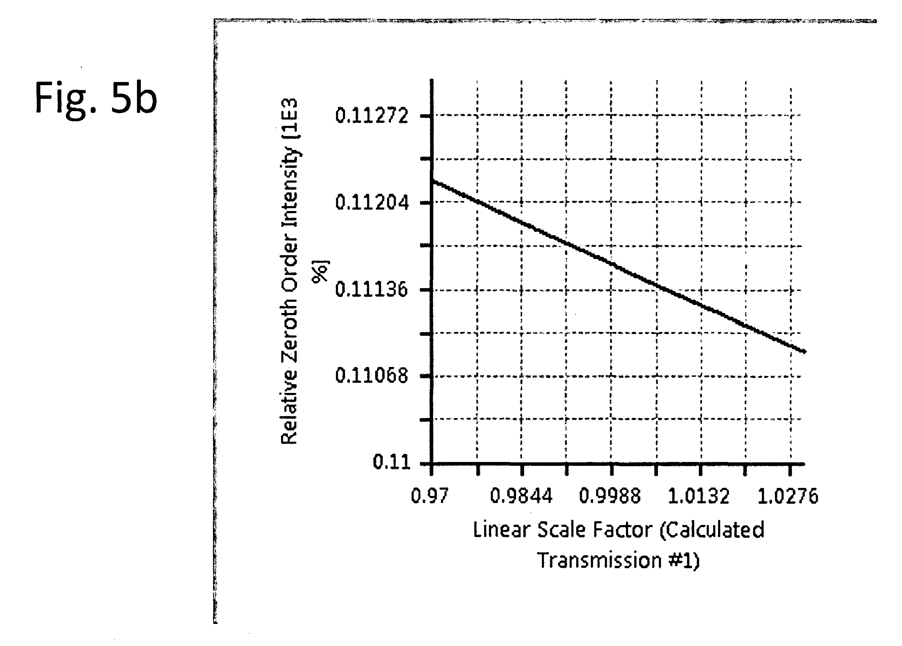

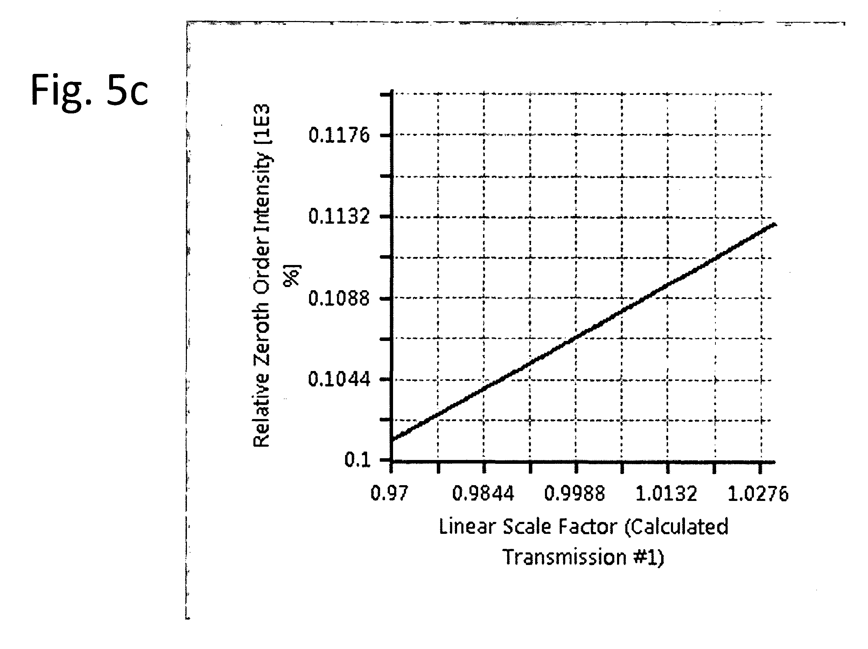

Fig. 5a zeigt die relative Intensität der nullten Beugungsordnung im 1f-Aufbau (vgl. Fig 3a), Fig 4b im Fresnel-Aufbau (vgl. Fig 3b) und Fig 4c im erfindungsgemäßen Aufbau (vgl. Fig. 3c) in Abhängigkeit von Fertigungstoleranzen. Die maximale relative Intensität der nullten Beugungsordnung aufgrund von Toleranzen in der Profiltiefe ist für den erfindungsgemäßen Aufbau deutlich geringer als für den 1f-Aufbau und ist, trotz der Verwendung einer refraktiven Linse, nicht größer als im reinen Fresnel-Aufbau. Der Einfluss von Fertigungstoleranzen auf die nullte Beugungsordnung ist ein entscheidender Faktor für die Uniformität von on-Axis-Designs.

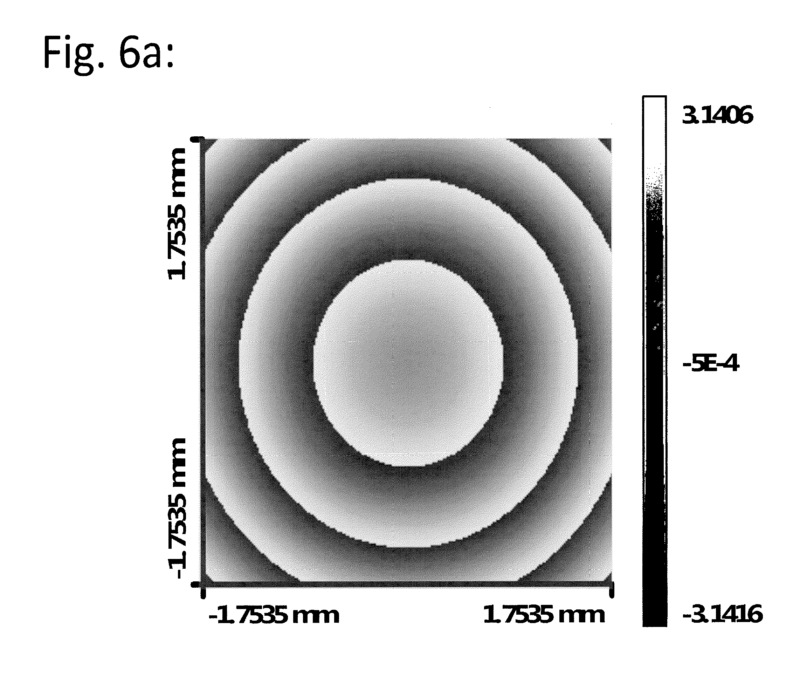

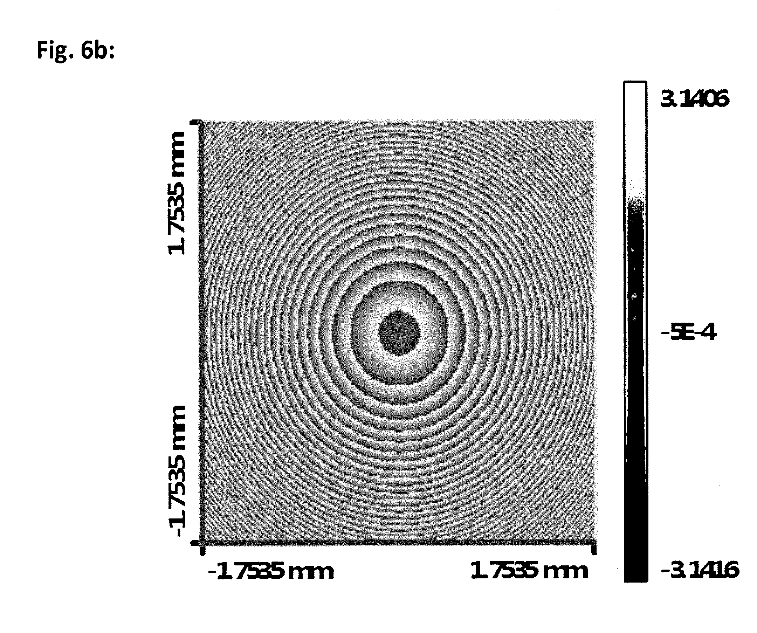

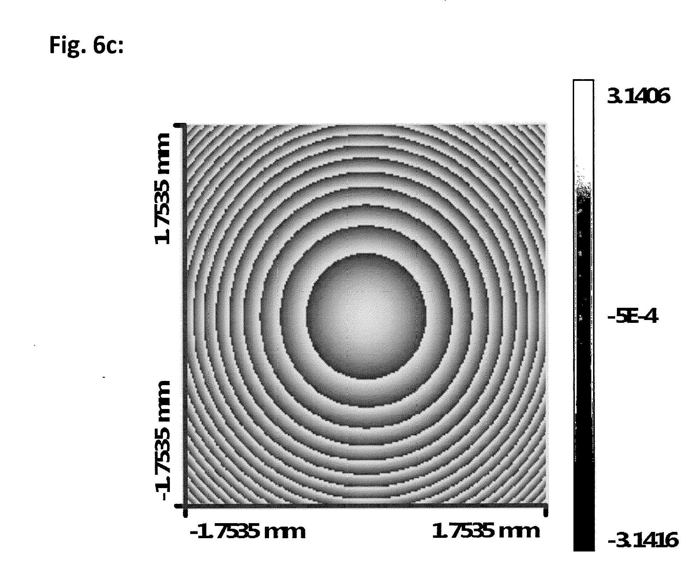

Fig. 6 zeigt Beispiele von Phasentransmissionsprofilen diffraktiver optischer Elemente aus einem Fraunhofer-1f-Aufbau, einem Fresnel-Aufbau und einem erfindungsgemäßen Aufbau mit gleichem Arbeitsabstand und gleicher wunschgemäßer Intensitätsverteilung. Fig. 6a zeigt die Phase eines Elementes für einen Fraunhofer-1f-Aufbau. Fig. 6b zeigt die Phase eines Fresnel-Elementes. Das Element für den neuen erfindungsgemäßen Aufbau ist in Fig. 6c dargestellt. Der Vergleich von Fig. 6b und Fig. 6c zeigt, dass der Gradient der Phase im Element für den erfindungsgemäßen Aufbau deutlich kleiner ist als im Fresnel-Element. Folglich können die Strukturen des erfindungsgemäßen Elementes mit einer deutlich geringeren Auflösung approximiert werden.

Der erfindungsgemäße neue optische Aufbau eröffnet vielfältige neue Designansätze und Lösungsmöglichkeiten für das Design optischer Systeme mit diffraktiven strahlformenden optischen Elementen. Zum einen können bei vorgegebenem Arbeitsabstand gegebenenfalls größere Brennweiten als in reinen "1f/2f-Aufbauten" oder "Fresnel-Aufbauten" verwendeten, beziehungsweise können bei festen Brennweiten die Arbeitsabstände durch Kombination von Fresnel und Fokussierlinse modifiziert werden.

Ein sehr wichtiger Aspekt bei der Designerstellung für diffraktive, strahlformende optische Elemente ist der Einfluss von Fertigungstoleranzen auf die optischen Gütefunktionen. Ein wichtiges Anwendungsbeispiel ist hier die Uniformität der Intensitätsverteilung bei der Strahlformung auf der optischen Achse (on -Axis-Designs). Abweichungen von der idealen Profiltiefe können hier zu einer höheren Intensität in der Oten Beugungsordnung führen, die sich dann in der Bearbeitungsebene negativ auf die Uniformität der Intensitätsverteilung auswirkt. Dieser Effekt kann unter Verwendung des vorgeschlagenen modifizierten Aufbaus drastisch reduziert werden. Ein weiterer Vorteil des neuen Designansatzes besteht in der Möglichkeit, bei gleichbleibendem Arbeitsabstand die Brennweite der Fresnel-Linse zu vergrößern.

Die vorgestellten Beispiele stelle nur eine Auswahl der möglichen Kombinationen dar, die eine übersichtliche Darstellung und vergleichsweise einfache Konzeption erlauben. Durch die Einführung eines positiven Abstandes zwischen Fresnel-Element und Fokussierlinse sowie die Wahl unterschiedlicher Brennweiten für Fresnel-und Fokussierlinse ergeben sich weitere vielfältige Designmöglichkeiten.

## Patentansprüche

1. Vorrichtung (100) zur Erzeugung einer wunschgemäßen Lichtintensitätsverteilung, umfassend eine Lichtquelle (1), die einen Lichtstrahl (5) mit einer ersten Intensitätsverteilung in eine Strahlrichtung (S) abgibt, eine der Lichtquelle nachgeordneten Strahlformungsoptik, die den Lichtstrahl in die wunschgemäße zweite Intensitätsverteilung in einer Bearbeitungsebene (4) umwandelt, **dadurch gekennzeichnet, dass** die Strahlformungsoptik ein diffraktives Phasenelement (2) mit integrierter sphärischer Phase und eine Fokussierlinse (3) umfasst.

2. Vorrichtung (100) nach Anspruch 1, **dadurch gekennzeichnet, dass** das diffraktive Phasenelement (2) als quantisiertes oder kontinuierliches Phasenelement ausgebildet ist.

3. Vorrichtung (100) nach Anspruch 1 oder 2, **dadurch gekennzeichnet, dass** das diffraktive Phasenelement (2) in einem Abstand d≥0 in Strahlrichtung (S) vor oder hinter der Fokussierlinse (3) angeordnet ist.

4. Vorrichtung (100) nach einem der vorhergehenden Ansprüche, **dadurch gekennzeichnet, dass** die Brennweiten des diffraktiven Phasenelements (2) und der Fokussierlinse (3) identisch oder unterschiedlich ausgebildet sind.
